# EUROPÄISCHE PATENTSCHRIFT

(11) **EP 3 017 853 B1**
(45) Veröffentlichungstag und Bekanntmachung des Hinweises auf die Patenterteilung: **12.09.2018**
(21) Anmeldenummer: 14003729.2
(22) Anmeldetag: 05.11.2014
(51) Int. Cl.: B01D 46/00, B01D 46/04, B01D 46/10

(54) **Filterdüse und Filterdüsensystem**
Filter nozzle and filter nozzle system
Buse de filtre et système de buse de filtre

(43) Veröffentlichungstag der Anmeldung: 11.05.2016
(73) Patentinhaber: Kleemeier, Schewe & Co. KSH GmbH, 32051 Herford (DE)
(72) Erfinder: Schewe, Christian, 32120 Hiddenhausen (DE)
(74) Vertreter: Schober, Mirko

(56) Entgegenhaltungen:
- EP-A1- 0 378 024
- DE-A1- 3 920 678
- DE-A1- 4 239 293
- DE-U1-202004 006 883
- FR-A- 1 184 324
- FR-A1- 2 879 943
- US-A- 4 579 659

## Beschreibung

Die Erfindung betrifft ein Filterdüsensystem mit einer Filterdüse und einer Aufnahme.
Gattungsgemäße Filterdüsen sind z.B. aus DE 20 2004 006 883 U1 bekannt. Dort ist an einem sich an das zum Einschrauben der Filterdüse in eine passende Aufnahme vorgesehenen Gewinde ein Sicherungsabschnitt vorgesehen. Dieser weist ein radial nach außen vorstehendes Sicherungsmittel auf, welches flügelartig von dem Sicherungsabschnitt absteht. Diese Sicherungsmittel verbreitern lokal den Durchmesser des Sicherungsabschnitts, jedoch ist der Abstand von deren äußerster Spitze in radialer Richtung kleiner als der Kernradius des Gewindes, damit die Sicherungsmittel das Einschrauben der Filterdüse nicht behindern. Das Sicherungsmittel hintergreift eine in der Aufnahme vorgesehene Innenverzahnung mit parallel zur Einschraubrichtung der Filterdüse verlaufenden Flankenlinien und kann so das Sicherungsmittel und damit die Filterdüse nicht mehr aus der Aufnahme durch Losrütteln oder dergleichen lösen.
Nachteilig ist, dass die Aufnahme neben dem eigentlichen Gewinde eine Innenverzahnung aufweisen muss, damit das Sicherungsmittel passende Hinterschneidungen zur Verfügung stellen kann. Das macht Aufnahmen aufwendiger und damit teurer.

Aufgabe der vorliegenden Erfindung ist es daher, eine Filterdüse der eingangs genannten Art anzugeben, die sich verliersicher in jede passende Gewindeaufnahme einschrauben lässt.

Gelöst wird diese Aufgabe durch ein Filterdüsensystem nach Anspruch 1. Vorteilhafte Ausführungsformen finden sich in den jeweiligen abhängigen Ansprüchen.
Der wesentliche Erfindungsgedanke sieht vor, die Schraube über wenigstens ein an einem Sicherungsabschnitt befindliches Sicherungsmittel zu sichern, welches beim Einschrauben durch den Kontakt des Sicherungsmitteils mit dem Gewinde der Gewindeaufnahme vorgespannt wird. Das vorgespannte Sicherungselement legt sich wie der Flügel eines Dübels an der Innenseite der Gewindeaufnahme an und greift entweder in die vertieften Bereiche des Gewindes selbst oder hinter eine in Einschraubrichtung hinter dem Gewinde der Gewindeaufnahme liegende Hinterschneidung. Auf diese Weise ist die Filterdüse gegen unbeabsichtigtes Herausdrehen geschützt und kann sich so nicht "losrütteln". Bei einem Wechsel der Filterdüse, die bevorzugt aus Kunststoff gebildet ist, was insbesondere für die Sicherungselemente gilt, werden die Sicherungselemente beim Herausdrehen der Filterdüse an der Hinterschneidung abgeschert.
Bevorzugt ist vorgesehen, dass der Durchmesser des Sicherungsabschnitts wenigstens geringer ist als der Kerndurchmesser des Gewindes des Gewindeabschnitts. Auf diese Weise entsteht zusätzlicher Verdrängungsraum, in den das oder die Sicherungselemente beim Einschrauben der Filterdüse und deren Kontakt mit dem Innengewinde der Gewindeaufnahme hinein ausweichen können, so dass das Einschrauben nicht behindert wird.

Das wenigstens eine Sicherungsmittel, bevorzugt sind zwei am Sicherungsabschnitt diametral gegenüber liegende Sicherungsmittel vorgesehen, ist ein am Sicherungsabschnitt angebrachtes oder einstückig mit dem Sicherungsabschnitt ausgebildetes Federelement. Dieses ist in einem ersten Bereich des Sicherungsabschnitts mit diesem verbunden und zumindest in einem zweiten Bereich des Sicherungsabschnitts von diesem beabstandet. Das Sicherungselement ist also bevorzugt wie der Flügel eines Dübels ausgebildet. So liegt der Sicherungsabschnitt immer an der Innenwand der Gewindeaufnahme an.

Dabei kann vorgesehen sein, dass der radiale Abstand der Außenseite des nicht vorgespannten Sicherungselements von der Gewindeachse in dem zweiten Bereich des Sicherungsabschnitts größer als der oder gleich dem Kernradius des Gewindeabschnitts ist. Auf diese Weise wird erreicht, dass bereits ein Sicherungseffekt gegen Lösen der Filterdüse eintritt, wenn das Sicherungselement in die Rillen des Gewindes einschnappt.

Bevorzugt ist dazu weiter vorgesehen, dass der Außendurchmesser der Filterdüse im Bereich des Sicherungsabschnitts einschließlich des oder der nicht vorgespannten Sicherungselemente größer als der oder gleich dem Kerndurchmesser des Gewindes des Gewindeabschnitts ist. Auf diese Weise wird sichergestellt, dass der Sicherungsabschnitt, der wie eine Schnappfeder wirkt, nach dem Durchlaufen des Gewindes in der Gewindeaufnahme zuverlässig hinter dem Gewinde einrastet.

Bevorzugt ist das Sicherungsmittel als Flügel nach Art des Flügels eines Dübels ausgebildet, indem das wenigstens eine Sicherungsmittel sich mit einer Richtungskomponente parallel zur Gewindeachse und einer weiteren Richtungskomponente in Radialrichtung des Gewindeabschnitts erstreckt. Alternativ oder ergänzend hierzu kann vorgesehen sein, dass das wenigstens eine Sicherungsmittel ein freies Ende aufweist, welches in einer Richtung parallel zur Gewindeachse von der Position beabstandet ist, an der das Sicherungsmittel mit dem Sicherungsabschnitt verbunden ist.

Die oben beschriebene Filterdüse eignet sich für den Einsatz in einem Filterdüsensystem mit einer Gewindeaufnahme und einer darin eingeschraubten Filterdüse. Dabei kann vorgesehen sein, dass das wenigstens eine Sicherungselement der Filterdüse eine Windung des Gewindes des Gewindeabschnitts oder eine sonstige Hinterschneidung der Gewindeaufnahme hintergreift.

Die Erfindung wird nachfolgend anhand des in den Figuren 1 bis 4 gezeigten Ausführungsbeispiels näher erläutert.
- Figur 1 -: zeigt eine partielle Schnittansicht durch ein erfindungsgemäßes Filterdüsensystem mit einer erfindungsgemäßen Filterdüse vor dem Einschrauben derselben,
- Figur 2 -: zeigt das System aus Figur 1 während des Einschraubens der Filterdüse,
- Figur 3 -: zeigt das System aus Figuren 1 und 2 nach dem Einschrauben der Filterdüse,
- Figur 4 -: zeigt eine Detailansicht der Figur 3.

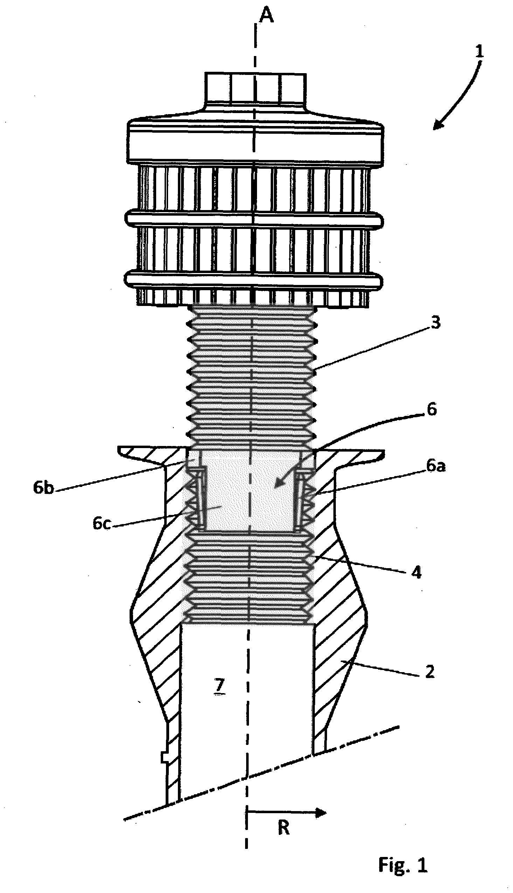

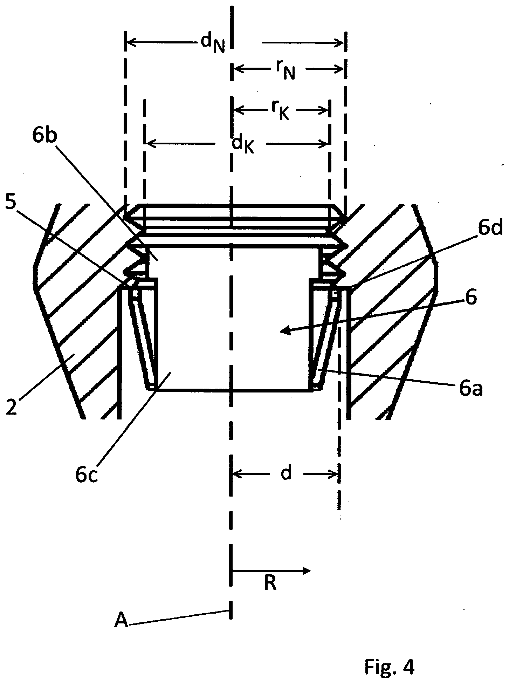

Bei der in den Figuren 1 bis 3 gezeigten Filterdüse 1 bezeichnet A die Längsachse des Gewindeabschnitts 3 der Filterdüse 1, dessen Gewinde sich um die Gewindeachse A herum windet. An den Gewindeabschnitt 3 der Filterdüse 1 schließt sich in Einschraubrichtung ein Sicherungsabschnitt 6 an, im gezeigten Beispiel ist dieser Sicherungsabschnitt 6 in dem dem Gewinde 3 zugewandten Bereich 6a etwas breiter als der sich anschließende Abschnitt 6c, weist jedoch bevorzugt einen geringeren Durchmesser auf als der Kerndurchmesser (Pos. d_{K} in Figur 4) des Gewindes 3.

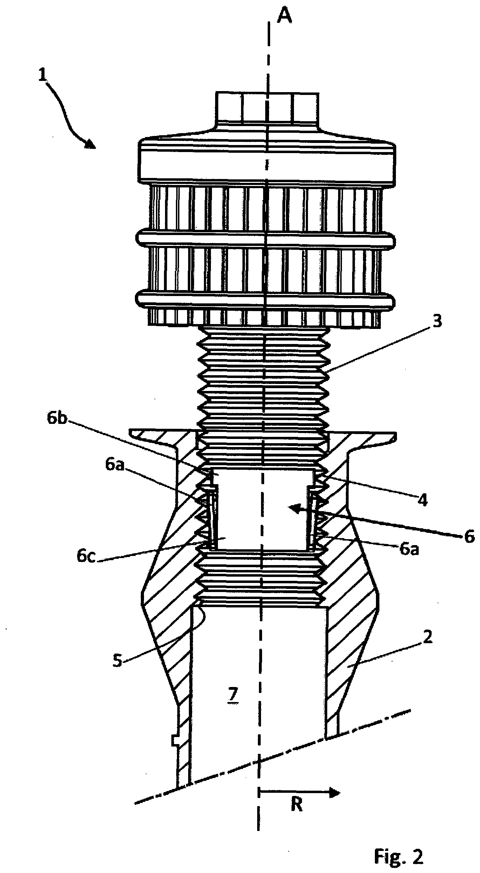

Im Bereich des Abschnitts 6c des Sicherungsabschnitts 6 sind Sicherungsmittel 6a angebracht oder einstückig mit dem Abschnitt 6c ausgebildet. Diese sind wie Flügel eines Dübels gestaltete Federelemente, welche beim Einschrauben der Filterdüse 1 in die Gewindeaufnahme 2 an ihren freien Enden (Pos. 6d in Figur 4) radial einwärts gedrückt werden. Dabei baut sich eine Federspannung in den Sicherungsmitteln 6a auf, die diese gegen das Innengewinde 4 der Gewindeaufnahme 2 drückt. Im weiteren Verlauf des Einschraubens nähert sich der Sicherungsabschnitt 6 dem in Einschraubrichtung hinter dem Gewinde 4 liegenden Freiraum 7 der Gewindeaufnahme 2 an. Die Enden 6d der Sicherungsmittel 6a schleifen dabei auf dem Innengewinde 4 entlang, Figur 2, bis das Gewinde 4 endet.

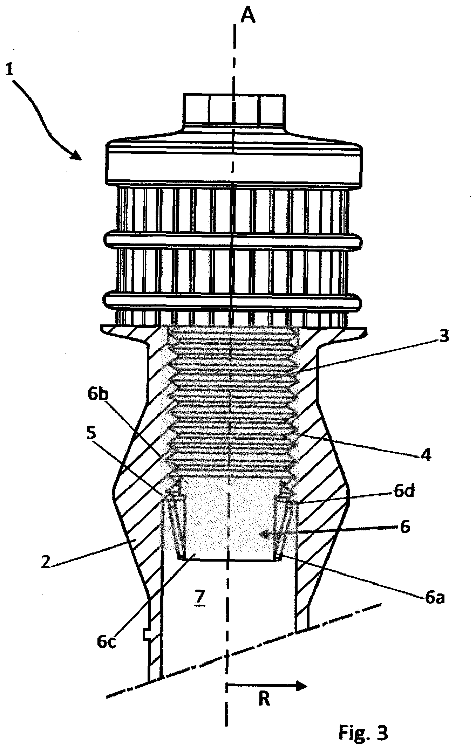

Diese Situation ist in Figur 3 dargestellt. Infolge der Vorspannung der federnden Sicherungsmittel 6a, von denen bevorzugt zwei zum Einsatz kommen, die sich bevorzugt an dem Sicherungsabschnitt 6 bezogen auf die Achse A diametral gegenüberliegen, bewegen diese sich in Radialrichtung R nach außen und hintergreifen Endabschnitte 5 des Gewindes 4. Bei der in Figur 3 gezeigten Situation ist es ohne größeren Krafteinsatz nicht mehr möglich, dass sich die Filterdüse 1 von selbst - etwa durch Erschütterungen im Betrieb derselben - aus dem Gewinde 4 der Aufnahme 2 lösen kann. Die bevorzugt wie der Rest der Filterdüse 1 aus Kunststoff bestehenden Sicherungsmittel 6a können beim Austauschen der Filterdüse durch Zurückdrehen (Herausdrehen) des Gewindeabschnitts 3 aus der Aufnahme 2 an der Hinterschneidungskante 5 abgeschert werden.

Die in Figur 4 gezeigte vergrößerte Darstellung zeigt nochmals den Bereich der Sicherungsmittel 6a, die die Kante 5 hintergreifen. Eingezeichnet sind auch - zum Verständnis der in den Ansprüchen verwendeten Begrifflichkeiten - der Nenndurchmesser d_{N} des Gewindes 3, der Nennradius r_{N} des Gewindes, der Kerndurchmesser d_{K} des Gewindes 3, der Kernradius rK des Gewindes 3, sowie der im nicht vorgespannten Zustand der Sicherungsmittel 6a vorliegende radiale Abstand d von dem am weitesten von der Achse A radial entfernten Teil 6d der Sicherungsmittel 6a und der Achse A.

Die erfindungsgemäße Filterdüse 1 erfordert an der entsprechenden Gewindeaufnahme 2 keine zusätzlichen Vorrichtungen wie Verzahnungen oder dergleichen, d.h. sie kann ohne weiteres bei bestehenden Standardaufnahmen verwendet und gegen unbeabsichtigtes Lösen ohne weitere Zusatzteile gesichert werden.

## Patentansprüche

1. Filterdüsensystem mit einer Gewindeaufnahme (4) und einer darin eingeschraubten Filterdüse (1) mit einem Gewindeabschnitt (3) zum Einschrauben in die Gewindeaufnahme (4), wobei der Gewindeabschnitt (3) einen sich daran anschließenden Sicherungsabschnitt (6) aufweist, wobei die Filterdüse einen Sicherungsabschnitt (6) aufweist, an dem wenigstens ein Sicherungsmittel (6a) zur Sicherung der Filterdüse (1) in der Gewindeaufnahme (4) angeordnet ist
**dadurch gekennzeichnet,**
**dass** das Sicherungsmittel (6a) so ausgelegt ist, dass es beim Einschrauben in die Gewindeaufnahme (4) durch den Kontakt mit dem Gewinde der Gewindeaufnahme (4) radial in Richtung der Gewindeachse (A) des Gewindeabschnitts (3) unter Ausbildung einer von der Gewindeachse (A) radial auswärts gerichteten Vorspannung gespannt wird.

2. Filterdüsensystem nach Anspruch 1,
**dadurch gekennzeichnet,**
**dass** der Durchmesser des Sicherungsabschnitts (6) geringer ist als der Kerndurchmesser (d_{K}) des Gewindes des Gewindeabschnitts (3).

3. Filterdüsensystem nach Anspruch 1 oder 2,
**dadurch gekennzeichnet,**
**dass** das wenigstens eine Sicherungsmittel (6a) ein am Sicherungsabschnitt (6) angebrachtes oder einstückig mit dem Sicherungsabschnitt (6) ausgebildetes Federelement ist, welches in einem ersten Bereich des Sicherungsabschnitts (6) mit diesem verbunden und zumindest in einem zweiten Bereich (6c) des Sicherungsabschnitts (6) von diesem beabstandet ist.

4. Filterdüsensystem nach Anspruch 3,
**dadurch gekennzeichnet,**
**dass** der radiale Abstand (d) der Außenseite des nicht vorgespannten Sicherungselements (6a) von der Gewindeachse (A) in dem zweiten Bereich (6c) des Sicherungsabschnitts (6) größer als der oder gleich dem Kernradius (r_{K}) des Gewindeabschnitts (3) ist.

5. Filterdüsensystem nach einem der Ansprüche 3 oder 4,
**dadurch gekennzeichnet,**
**dass** der Außendurchmesser der Filterdüse (1) im Bereich des Sicherungsabschnitts (6) einschließlich des oder der nicht vorgespannten Sicherungselemente (6) größer als der oder gleich dem Kerndurchmesser (d_{K}) des Gewindes des Gewindeabschnitts (3) ist.

6. Filterdüsensystem nach einem der vorigen Ansprüche,
**dadurch gekennzeichnet,**
**dass** das wenigstens eine Sicherungsmittel (6a) ein sich mit einer Richtungskomponente parallel zur Gewindeachse (A) und einer weiteren Richtungskomponente in Radialrichtung (R) des Gewindeabschnitts (3) erstreckendes Sicherungsmittel (6a) ist.

7. Filterdüsensystem nach einem der vorigen Ansprüche,
**dadurch gekennzeichnet,**
**dass** sie wenigstens zwei Sicherungsmittel (6a) aufweist.

8. Filterdüsensystem nach Anspruch 7,
**dadurch gekennzeichnet,**
**dass** die beiden Sicherungsmittel (6a) an diametral gegenüberliegenden Positionen am Sicherungsabschnitt (6) des Gewindeabschnitts (3) vorgesehen sind.

9. Filterdüsensystem nach einem der vorigen Ansprüche,
**dadurch gekennzeichnet,**
**dass** das wenigstens eine Sicherungsmittel (6a) ein freies Ende (6d) aufweist, welches in einer Richtung parallel zur Gewindeachse (A) von der Position beabstandet ist, an der das Sicherungsmittel (6a) mit dem Sicherungsabschnitt (6) verbunden ist.

10. Filterdüsensystem nach einem der vorigen Ansprüche,
**dadurch gekennzeichnet,**
**dass** das wenigstens eine Sicherungselement (6) der Filterdüse (1) eine Windung des Gewindes des Gewindeabschnitts (4) oder eine sonstige Hinterschneidung (5) der Gewindeaufnahme (4) hintergreift.

## Claims

1. A filter nozzle system with a threaded receptacle (4) and a filter nozzle (1) having a threaded section (3) screwed therein, said threaded section being for screwing into the threaded receptacle (4), the threaded section (3) having a subsequent securing section (6), wherein the filter nozzle has a securing section (6) on which at least one securing device (6a) for securing the filter nozzle (1) in the threaded receptacle (4) is disposed,
**characterised in that**
the securing device (6a) is designed in such a way that it is radially loaded in the direction of the thread axis (A) of the threaded section (3) through contact with the thread of the threaded receptacle (4) when being screwed into the threaded receptacle (4), forming a pre-load which is directed radially outwards from the thread axis (A).

2. The filter nozzle system as claimed in claim 1,
**characterised in that**
the diameter of the securing section (6) is smaller than the core diameter (d_{K}) of the threaded section's thread (3).

3. The filter nozzle system as claimed in claim 1 or 2,
**characterised in that**
the at least one securing device (6a) is a spring element which is mounted on the securing section (6) or is formed integrally with the securing section (6) and which is connected to this in a first segment of the securing section (6) and spaced apart therefrom in at least a second segment (6c) of the securing section (6) .

4. The filter nozzle system as claimed in claim 3,
**characterised in that**
the radial distance (d) of the outside of the non-preloaded securing device (6a) from the thread axis (A) in the second segment (6c) of the securing section (6) is larger than or equal to the core radius (r_{K}) of the threaded section (3).

5. The filter nozzle system as claimed in claims 3 or 4,
**characterised in that**
the outer diameter of the filter nozzle (1) in the area of the securing section (6) including the non-preloaded securing device(s) (6) is larger than or equal to the core diameter (d_{K}) of the threaded section's thread (3).

6. The filter nozzle system as claimed in any one of the preceding claims,
**characterised in that**
the at least one securing device (6a) is a securing device (6a) extending with one directional component in parallel to the thread axis (A) and with another directional component in the radial direction (R) of the threaded section (3).

7. The filter nozzle system as claimed in any one of the preceding claims,
**characterised in that**
it comprises at least two securing devices (6a).

8. The filter nozzle system as claimed in claim 7,
**characterised in that**
the two securing devices (6a) are provided at diametrically opposed positions on the securing section (6) of the threaded section (3).

9. The filter nozzle system as claimed in any one of the preceding claims,
**characterised in that**
the at least one securing device (6a) has a free end (6d) which is spaced in a direction parallel to the thread axis (A) from the position at which the securing device (6a) is connected to the securing section (6) .

10. The filter nozzle system as claimed in any one of the preceding claims,
**characterised in that**
the at least one securing device (6) of the filter nozzle (1) engages a turn of the thread of the threaded section (4) or another undercut (5) of the threaded receptacle (4).

## Revendications

1. Système de buse de filtre comprenant un réceptacle fileté (4) et une buse de filtre (1) vissée dans celui-ci, avec une section filetée (3) pour le vissage dans le réceptacle fileté (4), sachant que la section filetée (3) présente une section de sécurisation (6) s'y raccordant, sachant que la buse de filtre présente une section de sécurisation (6), à laquelle est associé au moins un moyen de sécurisation ((6a) pour la sécurisation de la buse de filtre (1) dans le réceptacle fileté (4),
**caractérisé en ce que**
le moyen de sécurisation (6a) est conçu de manière à ce que, lors du vissage dans le réceptacle fileté (4), par le contact avec le filet du réceptacle fileté (4), il soit serré radialement, dans la direction de l'axe de filetage (A) de la section filetée (3), avec formation d'une précontrainte orientée radialement, vers l'extérieur, à partir de l'axe de filetage (A).

2. Système de buse de filtre selon la revendication 1,
**caractérisé en ce que**
le diamètre de la section de sécurisation (6) est plus petit que le diamètre du noyau (dₖ) du filetage de la section filetée (3).

3. Système de buse selon revendication 1 ou 2,
**caractérisé en ce que**
l'au moins un moyen de sécurisation (6a) est un élément faisant ressort, qui, équipant la section de sécurisation (6) ou étant formé d'une pièce avec la section de sécurisation (6), est relié à la section de sécurisation (6), dans une première partie de celle-ci et est distancée de la section de sécurisation (6) dans une deuxième partie (6c) de celle-ci.

4. Système de buse selon la revendication 3,
**caractérisé en ce que**
la distance radiale (d) entre le côté extérieur du moyen de sécurisation (6a) non précontraint et l'axe de filetage (A), dans la deuxième section (6c) de la section de sécurisation (6) est supérieure ou égale au rayon de noyau (rₖ) de la section filetée (3).

5. Système de buse selon l'une des revendications 3 ou 4,
**caractérisé en ce que**
le diamètre extérieur de la buse de filtre (1), dans la région de la section de sécurisation (6), y compris de l'élément ou les éléments de sécurisation (6) non précontraint/s, est supérieur ou égal au diamètre de noyau (dₖ) du filetage de la section filetée (3).

6. Système de buse selon l'une des revendications précédentes,
**caractérisé en ce que**
l'au moins un moyen de sécurisation (6a) est un moyen de sécurisation (6a), qui, avec une composante directionnelle, s'étend parallèlement à l'axe de filetage (A) et, avec une autre composante directionnelle, dans la direction radiale (R) de la section filetée (3).

7. Système de buse selon l'une des revendications précédentes,
**caractérisé en ce que**
celui-ci présente au moins deux moyens de sécurisation (6a) .

8. Système de buse selon la revendication 7,
**caractérisé en ce que**
les deux moyens de sécurisation (6a) sont prévus dans des positions diamétralement opposées, sur la section de sécurisation (6) de la section filetée (3).

9. Système de buse selon l'une des revendications précédentes,
**caractérisée en ce que**
l'au moins un moyen de sécurisation (6) présente une extrémité libre (6d) qui, dans une direction, est distancée, parallèlement à l'axe du filetage (A), d'une position, dans laquelle le moyen de sécurisation (6a) est relié à la section de sécurisation (6).

10. Système de buse selon l'une des revendications précédentes,
**caractérisé en ce que**
l'au moins un élément de sécurisation (6) de la buse de filtre (1) s'engage derrière une spire du filet du réceptacle fileté (4) ou d'une contredépouille quelconque (5) du réceptacle fileté (4).
